# EUROPÄISCHE PATENTSCHRIFT

(11) **EP 3 992 015 B1**
(45) Veröffentlichungstag und Bekanntmachung des Hinweises auf die Patenterteilung: **31.12.2025**
(21) Anmeldenummer: 21206055.2
(22) Anmeldetag: 02.11.2021
(51) Int. Cl.: B60L 53/10, B60L 53/30, B60L 53/66, B60L 53/68

(54) **COMPUTERPROGRAMMPRODUKT FÜR EINE ELEKTRISCHE LADESTATION UND COMPUTERIMPLEMENTIERTES VERFAHREN ZUM ELEKTRISCHEN LADEN EINER TRAKTIONSBATTERIE EINES FAHRZEUGS**
COMPUTER PROGRAM PRODUCT FOR AN ELECTRICAL CHARGING STATION AND COMPUTER-IMPLEMENTED METHOD FOR ELECTRICALLY CHARGING A TRACTION BATTERY OF A VEHICLE
PRODUIT-PROGRAMME INFORMATIQUE POUR STATION DE RECHARGE ÉLECTRIQUE ET PROCÉDÉ MISE EN UVRE PAR ORDINATEUR PERMETTANT DE RECHARGER ÉLECTRIQUEMENT UNE BATTERIE DE TRACTION D'UN VÉHICULE

(30) Priorität: 03.11.2020 DE 102020128965
(43) Veröffentlichungstag der Anmeldung: 04.05.2022
(73) Patentinhaber: Westenergie AG, 45128 Essen (DE)
(72) Erfinder: Herr, Stefan, 40477 Düsseldorf (DE); Kledewski, Ingo, 44319 Dortmund (DE)
(74) Vertreter: Bals & Vogel Patentanwälte PartGmbB

(56) Entgegenhaltungen:
- US-A1- 2013 207 605
- US-A1- 2019 107 406
- US-A1- 2020 130 864

## Beschreibung

Die Erfindung betrifft ein Computerprogrammprodukt für eine elektrische Ladestation zum elektrischen Laden einer Traktionsbatterie eines Fahrzeugs, ein computerimplementiertes Verfahren zum elektrischen Laden einer Traktionsbatterie eines Fahrzeugs, ein computerlesbares Speichermedium sowie eine elektrische Ladestation zum elektrischen Laden einer Traktionsbatterie eines Fahrzeugs.

Es ist allgemein bekannt, dass auf elektrischen Ladestationen für Fahrzeuge mit Traktionsbatterien, beispielsweise Elektrofahrzeuge, eine sog. "embedded Software", die auch Firmware genannt wird, ausgeführt wird. Unter der Firmware versteht man eine Software, die in elektronischen Geräten eingebettet ist und dort grundlegende Funktionen leistet bzw. technische Vorgänge ausführt. Die Firmware wird üblicherweise vom Hersteller der elektrischen Ladestation als ein kompiliertes Produkt bereitgestellt. Die Firmware kann beispielsweise eine Applikation sein, welche auf einem UNIX-Betriebssystem ausgeführt wird.

Dadurch, dass die Firmware als ein kompiliertes Produkt vorliegt, kann ein Betreiber einer Ladestation (auch Charge Point Operator genannt) einzelne technische Funktionen der Firmware bzw. Vorgänge, die auf Hardwarekomponenten der elektrischen Ladestation durch- bzw. ausgeführt werden, nur begrenzt verändern. Es ist dem Betreiber insbesondere nicht möglich, eigene Applikationen auf seiner elektrischen Ladestation auszuführen.

US 2013/207605 A1 offenbart Computerprogrammprodukt für eine elektrische Ladestation zum elektrischen Laden einer Traktionsbatterie eines Fahrzeugs, wobei das Computerprogrammprodukt eine Firmware und ein Interpreter für ein Skript aufweist, wobei die Firmware und der Interpreter Befehle umfassen, die bei deren/dessen Ausführung durch zumindest einen Computer der elektrischen Ladestation zumindest einen ersten/zweiten Vorgang der elektrischen Ladestation ausführen.

Es ist eine Aufgabe der Erfindung, die Veränderbarkeit der technischen Funktionen in einer elektrischen Ladestation durch ihren Betreiber zu verbessern, ohne die Sicherheit und Funktionalität der elektrischen Ladestation dadurch zu vermindern oder einzuschränken.

Die voranstehende Aufgabe wird durch die Gegenstände der Patentansprüche, insbesondere durch ein Computerprogrammprodukt für eine elektrische Ladestation zum elektrischen Laden einer Traktionsbatterie eines Fahrzeugs nach Anspruch 1, ein computerimplementiertes Verfahren zum elektrischen Laden einer Traktionsbatterie eines Fahrzeugs nach Anspruch 9, ein computerlesbares Speichermedium nach Anspruch 11, und eine elektrische Ladestation nach Anspruch 12 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Computerprogrammprodukt beschrieben sind, selbstverständlich auch im Zusammenhang mit dem erfindungsgemäßen Verfahren, dem erfindungsgemäßen computerlesbaren Datenspeicher und der erfindungsgemäßen elektrischen Ladestation sowie jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Computerprogrammprodukt für eine elektrische Ladestation zum elektrischen Laden einer Traktionsbatterie eines Fahrzeugs. Das Computerprogrammprodukt weist eine Firmware auf, welche Befehle umfasst, die bei Ausführung der Firmware durch zumindest einen Computer der elektrischen Ladestation zumindest einen ersten Vorgang der elektrischen Ladestation ausführen. Das Computerprogrammprodukt weist ferner einen Interpreter für ein Skript auf, wobei der Interpreter Befehle umfasst, die bei Ausführung des Interpreters durch den zumindest einen Computer in dem Skript befindliche Befehle ausführen, die zumindest einen zweiten Vorgang der elektrischen Ladestation ausführen.

Das Skript in dem erfindungsgemäßen Computerprogrammprodukt ermöglicht damit vorteilhafterweise die Ausführung von zumindest einem zweiten Vorgang der elektrischen Ladestation, ohne einen ersten Vorgang der elektrischen Ladestation zu erlauben. Dadurch erfolgt eine Trennung der erfindungsgemäß betrachteten unterschiedlichen Vorgänge. Mit anderen Worten sind der zumindest eine erste Vorgang und der zumindest eine zweite Vorgang voneinander verschieden. Insbesondere können der zumindest eine erste Vorgang und der zumindest eine zweite Vorgang unterschiedliche Klassen von Vorgängen sein, die sich durch eine wesentliche Eigenschaft voneinander unterscheiden und deren separate Ausführung daher sinnvoll ist. Insbesondere kann es sich dabei um die Eigenschaften einer Sicherheit und/oder einer oder mehrerer bezüglich des Ladens relevanten Norm(en) handeln, wie im Folgenden näher erläutert wird. Die Trennung der Ausführung der Vorgänge voneinander erfolgt durch die Bereitstellung von unterschiedlichen Komponenten für das Computerprogrammprodukt, namentlich der Firmware und dem Skript, zum Ausführen der Vorgänge.

Die Vorgänge selbst sind technische Vorgänge an der elektrischen Ladestation. Insbesondere können diese technischen Vorgänge von entsprechender Hardware bzw. entsprechenden Hardwarekomponenten der elektrischen Ladestation ausgeführt werden. Zumindest jedoch ist diese Hardware an den Vorgängen beteiligt.

Insbesondere ist vorgesehen, dass der zumindest eine erste Vorgang ein sicherheitskritischer und bezüglich des (elektrischen) Ladens (der Traktionsbatterie des Fahrzeugs) normenrelevanter Vorgang der elektrischen Ladestation ist und der zumindest eine zweite Vorgang ein sicherheitsunkritischer und bezüglich des (elektrischen) Ladens (der Traktionsbatterie des Fahrzeugs) normenirrelevanter Vorgang der elektrischen Ladestation ist.

Das Skript in dem erfindungsgemäßen Computerprogrammprodukt ermöglicht damit vorteilhafterweise die Ausführung von zumindest einem sicherheitsunkritischen und bezüglich des Ladens normenirrelevanten Vorgang der elektrischen Ladestation, ohne einen sicherheitskritischen und bezüglich des Ladens normenrelevanten Vorgang der elektrischen Ladestation zu erlauben. Dadurch erfolgt eine Trennung der entsprechend betrachteten unterschiedlichen Vorgänge, die einerseits sicherheitsunkritisch und bezüglich des Ladens normenirrelevant und andererseits sicherheitskritisch und/oder bezüglich des Ladens normenrelevant sind. Diese Trennung erfolgt durch die Bereitstellung von unterschiedlichen Komponenten für das Computerprogrammprodukt, namentlich der Firmware und dem Skript, zum Ausführen der Vorgänge.

Die Firmware kann insbesondere unterschiedliche Befehle umfassen, die bei Ausführung der Firmware durch den zumindest einen Computer jeweils unterschiedliche erste, insbesondere sicherheitskritische und/oder bezüglich des Ladens normenrelevante Vorgänge, ausführt. Selbstverständlich kann auch das Skript unterschiedliche Befehle umfassen, die bei Ausführung des Interpreters durch den zumindest einen Computer ausgeführt werden und dadurch jeweils unterschiedliche zweite, insbesondere sicherheitsunkritische und/oder bezüglich des Ladens normenirrelevante, Vorgänge ausführen.

Als sicherheitskritische Vorgänge werden insbesondere Vorgänge verstanden, die während einem Ladevorgang oder für einen Ladevorgang ausgeführt werden und kritisch für die Sicherheit des Nutzers der Ladestation sind. Ein sicherheitskritischer Vorgang ist beispielsweise die Überprüfung der Funktionalität einer Schaltereinheit, insbesondere, ob die Schaltereinheit einen Stromfluss erfolgreich trennen kann, sein. Auch die Überwachung von elektrischen Größen, insbesondere die Detektion eines Überstroms und/oder einer Überspannung ist ein sicherheitskritischer Vorgang. Ferner ist auch das Schließen bzw. Zuschalten einer Schaltereinheit, nur wenn zumindest ein an die elektrische Ladestation angeschlossenes Fahrzeug detektiert wurde, ein solcher sicherheitskritischer Vorgang. Zudem sind auch die Detektion eines Fehlerstroms und die Überwachung einer Temperatur der elektrischen Ladestation derartige sicherheitskritische Vorgänge.

Als sicherheitsunkritische Funktionen werden hingegen solche Vorgänge verstanden, die nicht sicherheitskritisch sind. Insbesondere sind sicherheitsunkritische Funktionen damit solche, die während eines Ladevorgangs oder außerhalb eines Ladevorgangs ausgeführt werden und unkritisch für die Sicherheit des Nutzers der elektrischen Ladestation sind. Beispiele solcher sicherheitsunkritischen Funktionen sind eine Kommunikation der elektrischen Ladestation mit einer IT-Infrastruktur bzw. einem Backend, die Messung einer übertragenen elektrischen Energie, eine Nutzerauthentifizierung, das Durchführen einer Fahrzeugkommunikation und das Durchführen eines Lastmanagements.

Als bezüglich des Ladens normenrelevante Vorgänge werden dabei insbesondere Vorgänge verstanden, die während einem Ladevorgang oder für einen Ladevorgang ausgeführt werden und durch eine Norm bezüglich des Ladens des Fahrzeugs bzw. seiner Traktionsbatterie vorgegeben sind. Bezüglich des Ladens normenirrelevante Vorgänge sind hingegen solche, die nicht auf einer Norm bezüglich des Ladens des Fahrzeugs bzw. seiner Traktionsbatterie beruhen.

Vorzugsweise sind die sicherheitskritischen Vorgänge und/oder die bezüglich des Ladens normenirrelevanten Vorgänge durch den Betreiber der Ladestation nicht veränderbar. Dadurch wird seitens des Herstellers der elektrischen Ladestation sichergestellt, dass die von ihm garantierte Sicherheit bei der Ausführung der sicherheitskritischen Vorgänge und/oder der bezüglich des Ladens normenrelevanten Vorgänge gewährleistet werden kann. Andererseits ermöglicht der Hersteller der elektrischen Ladestation mit dem hierfür bereitgestellten Computerprogrammprodukt mit dem Interpreter, dass der Betreiber ein Skript auf die elektrische Ladestation aufspielen kann, mittels welchem er die sicherheitsunkritischen und/oder bezüglich des Ladens normenirrelevanten Vorgänge verändern kann und/oder solche auf die elektrische Ladestation aufspielen kann, damit diese von der entsprechenden Hardware der elektrischen Ladestation ausgeführt werden können.

Damit wird eine einfache Möglichkeit dafür bereitgestellt, dass technische Funktionen bzw. Vorgänge in der elektrischen Ladestation nach ihrer Installation verändert werden können, ohne dass hierdurch die Sicherheit oder Funktionalität der elektrischen Ladestation verringert wird. Insbesondere werden die jeweiligen Vorgänge von unterschiedlichen Komponenten, der Firmware einerseits und dem Skript andererseits, ausgeführt, wodurch vermieden wird, dass die Komponenten sich gegenseitig beeinflussen und es zu einer unerwünschten Veränderung eines sicherheitskritischen und/oder eines bezüglich des Ladens normenrelevanten Vorgangs kommt, durch den die elektrische Ladestation schlimmstenfalls eine Gefahr für den Nutzer darstellen könnte und/oder anders als durch den Gesetzgeber festgelegt betrieben würde. Dadurch wird die technische Sicherheit der elektrischen Ladestation verbessert. Ferner wird natürlich die Veränderbarkeit von technischen Vorgängen bzw. Erweiterbarkeit der elektrischen Ladestation um technische Vorgänge, die nicht sicherheitskritisch und/oder bezüglich des Ladens normenrelevant sind, ermöglicht. Dabei wird gleichsam sichergestellt, dass der Betreiber keinen unerwünschten und versehentlichen Einfluss auf die Firmware nehmen kann, da das Skript für die veränderbaren und erweiterbaren Vorgänge vorgesehen ist. Dies erhöht die Sicherheit noch weiter.

Es kann vorgesehen sein, dass das Computerprogrammprodukt ferner eine mit dem Interpreter verknüpfte Programmierschnittstelle aufweist, welche Befehle umfasst, die bei Ausführung des Interpreters und der Programmierschnittstelle durch den zumindest einen Computer die in dem Skript befindlichen Befehle ausführen, die den zumindest einen zweiten Vorgang der elektrischen Ladestation ausführt. Entsprechend kann der zumindest eine zweite Vorgang durch die Programmierschnittstelle vorgegeben sein. Insbesondere kann der Interpreter mit der Programmierschnittstelle derart funktional gekoppelt sein, dass der Interpreter die Befehle des Skripts mittels der Programmierschnittstelle zur Ausführung der Vorgänge auf der Hardware ausführt. Entsprechend kann die Programmierschnittstelle die zweiten technischen Vorgängen zur Ausführung auf der Hardware bereitstellen.

Dabei kann vorgesehen sein, dass der Interpreter und/oder die Programmierschnittstelle in der Firmware enthalten ist. Dadurch können der Interpreter und/oder die Programmierschnittstelle vorteilhafterweise derart in der elektrischen Ladestation bereitgestellt werden, dass der Betreiber diese mittels des Skripts in dem vom Hersteller vorgesehenen Umfang, jedoch nicht darüber hinaus, nutzen kann. Mit anderen Worten kann der Betreiber der elektrischen Ladestation die Programmierschnittstelle zumindest nicht ohne Weiteres verändern, was eine unerwünschte Sicherheitsgefahr für einen Nutzer bergen könnte.

Ferner kann vorgesehen sein, dass die Programmierschnittstelle mit einem vorgegebenen Vorgangsumfang für den zumindest einen zweiten Vorgang eingerichtet ist, der bei Ausführung der in dem Skript befindlichen Befehle ausgeführt werden kann. Dadurch können dem Betreiber der elektrischen Ladestation seitens des Herstellers der elektrischen Ladestation nur solche Vorgänge zur Ausführung mittels des Skripts zur Verfügung gestellt werden, welche der Hersteller als zweite Vorgänge kategorisiert, insbesondere sicherheitsunkritisch und/oder bezüglich des Ladens normenirrelevant einstuft. Diese Vorgänge werden durch den Vorgangsumfang vorgegeben. Entsprechend kann das Skript nicht mit einem Vorgangsumfang der ersten Vorgänge der Firmware kollidieren bzw. diese sicherheitsgefährdend beeinflussen, da das Skript mittels der Programmierschnittstelle nicht die Möglichkeit hat, auf diese Einfluss zu nehmen.

Außerdem kann vorgesehen sein, dass die Firmware kompiliert ist. Wenn die Firmware kompiliert ist, legt diese als ein maschinenlesbarer Code vor, der seitens des Betreibers der elektrischen Ladestation nicht ohne Weiteres verwendet werden kann. Demgegenüber kann der Computer diesen ohne Weiteres ausführen, um den Vorgang (an) der elektrischen Ladestation, insbesondere an zumindest einer seiner Hardwarekomponenten, auszuführen. Dadurch kann gewährleistet werden, dass die ersten Vorgänge nicht vom Betreiber verändert werden können. Die Firmware kann als kompiliertes Programmprodukt damit auch ohne ein Skript dazu in der Lage sein, Standardapplikationen der elektrischen Ladestationen, beispielsweise den Ladevorgang zu starten, auszuführen und zu stoppen, eine Backend-Kommunikation durchzuführen, eine Kundenauthentifizierung durchzuführen, usw., auszuführen.

Ferner kann vorgesehen sein, dass das Computerprogrammprodukt das Skript umfasst. Das Skript kann dadurch vorteilhafterweise vom Hersteller bereitgestellt werden. Individuelle zweite Vorgänge können hier bereits für den Betreiber der elektrischen Ladestation hinterlegt bzw. vordefiniert sein. Dies stellt auch sicher, dass das Skript kompatibel zu der Firmware bzw. dem Interpreter ist und die gewünschten Vorgänge ausführen kann.

Dabei kann vorgesehen sein, dass das Skript außerhalb der Firmware angeordnet ist. Insbesondere kann das Skript in einer anderen Programmiersprache als die Firmware geschrieben sein. Insbesondere kann das Skript nicht kompiliert vorliegen, sondern muss vor der Ausführung seiner Befehle auf dem Computer durch den Interpreter interpretiert werden.

Das Skript kann in einer interpretierbaren Skriptsprache wie beispielsweise Python, Perl, JScript oder MATLAB vorliegen.

Außerdem kann vorgesehen sein, dass das Skript dazu eingerichtet ist, mittels einer HTTPS-und/oder eine FTP-Schnittstelle verändert und/oder ausgetauscht zu werden. Dadurch kann das Skript nachträglich auf einfache Art und Weise bzw. mit einfachem Zugriff darauf verändert werden. Damit wird also die Anpassbarkeit bzw. die Individualisierbarkeit der zweiten Vorgänge der elektrischen Ladestation weiter erhöht. Die HTTPS- und/oder die FTP-Schnittstelle kann dabei selbstverständlich verschlüsselt sein, damit nur berechtigten Personen der Zugriff auf das Skript ermöglicht wird.

Auch kann vorgesehen sein, dass die Firmware ferner Befehle umfasst, die bei Ausführung der Firmware durch den zumindest einen Computer zumindest einen zweiten Vorgang der elektrischen Ladestation ausführt. Entsprechend können auch dann zweite Vorgänge von der elektrischen Ladestation ausgeführt werden, die von dem Hersteller in der Firmware vorgesehen worden sein können, wenn das Skript entsprechende Befehle zur Ausführung dieser nicht vorsieht. Dies kann beispielsweise der Fall sein, wenn der Betreiber der elektrischen Ladestation kein Skript nutzt und von der Veränderbarkeit der technischen Funktionen bzw. zweiten Vorgänge der elektrischen Ladestation keinen Gebrauch macht. Insoweit ist die Verwendung des Skripts zur Ausführung von zweiten Vorgängen nicht zwingend.

Dabei kann vorgesehen sein, dass das Skript mit einem Vorrang bei der Ausführung des zumindest einen zweiten Vorgangs gegenüber der Firmware eingerichtet ist. Dadurch kann sichergestellt werden, dass die vom Betreiber im Skript vorgesehenen Befehle bzw. Vorgänge gegenüber den herstellerseitigen Befehlen bzw. Vorgängen in der Firmware bevorzugt ausgeführt werden. Wenn also im Skript entsprechende Befehle für einen Vorgang vorgesehen sind, werden diese auch ausgeführt. Wenn das Skript hingegen keine solchen Befehle für einen Vorgang vorsieht, wird der Vorgang entsprechend den Befehlen in der Firmware ausgeführt. Dabei besteht die Möglichkeit, dass das Skript die Firmware überschreibt, um die eigenen Befehle und dadurch Vorgänge auszuführen. Alternativ besteht aber auch die Möglichkeit, dass firmwareseitig die zweiten Vorgänge gespeichert sind, die das Skript übernimmt. Alternativ besteht noch die Möglichkeit, dass das Skript mit der Firmware beim Start des Skriptes kommuniziert und die Vorgänge mitteilt, die vom Skript überschrieben werden.

Für den Fall eines Fehlerereignisses kann vorgesehen sein, dass die Firmware derart mit dem Skript kommuniziert, dass zunächst bei dem Skript angefragt wird, ob das aufgetretene Fehlerereignis dem Skript bekannt ist und es Befehle umfasst, welche eine Lösung für das Fehlerereignis bereitstellt. Falls dem so ist, können die Befehle des Skripts ausgeführt werden. Anderenfalls kann vorgesehen sein, dass auf die Firmware zurückgefallen wird. Dadurch kann vermieden werden, dass fehlerhafte Skripts zu einer Fehlfunktion der Firmware fühlen, da schlussendlich immer die Firmware als Rückfalllösung für den Betrieb der elektrischen Ladestation ausgeführt wird.

Gemäß einem zweiten Aspekt der Erfindung wird die eingangs erwähnte Aufgabe gelöst durch ein computerimplementiertes Verfahren zum elektrischen Laden einer Traktionsbatterie eines Fahrzeugs, wobei das Verfahren die folgenden Schritte aufweist:
(a) Ausführen zumindest eines ersten Vorgangs der elektrischen Ladestation zum elektrischen Laden der Traktionsbatterie des Fahrzeugs mittels einer von zumindest einem Computer der elektrischen Ladestation ausgeführten Firmware der elektrischen Ladestation, und
(b) Ausführen zumindest eines zweiten Vorgangs der elektrischen Ladestation mittels eines von dem zumindest einen Computer ausgeführten Skripts der elektrischen Ladestation.

Das Verfahren kann insbesondere bei Ausführung des Computerprogrammprodukts nach dem ersten Aspekt der Erfindung auf dem zumindest einem Computer der elektrischen Ladestation durchgeführt werden. Mit anderen Worten, wenn das Computerprogrammprodukt auf dem zumindest einem Computer der elektrischen Ladestation durchgeführt wird, werden die Schritte des Verfahrens (auf der elektrischen Ladestation) durchgeführt.

Die Verfahrensschritte können beliebig oft im Verfahren ausgeführt werden und auch die Reihenfolge ist beliebig. Entscheidend ist, dass die hinsichtlich der Sicherheit und Norm unterschiedlichen Arten von Vorgängen ausgeführt werden, und zwar jeweils mittel des Skripts und der Firmware.

Insbesondere ist vorgesehen, dass der zumindest eine erste Vorgang ein sicherheitskritischer und bezüglich des Ladens normenrelevanter Vorgang der elektrischen Ladestation ist und der zumindest eine zweite Vorgang ein sicherheitsunkritischer und bezüglich des Ladens normenirrelevanter Vorgang der elektrischen Ladestation ist.

Auch kann vorgesehen sein, dass der zumindest eine zweite Vorgang der elektrischen Ladestation mittels eines in der Firmware enthaltenen Interpreters, welcher das Skript ausführt, ausgeführt wird.

Gemäß einem dritten Aspekt der Erfindung wird die eingangs erwähnte Aufgabe gelöst durch ein computerlesbares Speichermedium, auf welchem das Computerprogrammprodukt nach dem ersten Aspekt der Erfindung gespeichert ist.

Gemäß einem vierten Aspekt der Erfindung wird die eingangs erwähnte Aufgabe gelöst durch eine elektrische Ladestation zum elektrischen Laden einer Traktionsbatterie eines Fahrzeugs, wobei die elektrische Ladestation zumindest einen Computer und das computerlesbare Speichermedium nach dem dritten Aspekt der Erfindung enthält.

Entsprechend werden bei dem Verfahren gemäß dem zweiten Aspekt der Erfindung, bei dem computerlesbaren Speichermedium gemäß dem dritten Aspekt der Erfindung und mit der elektrischen Ladestation gemäß dem vierten Aspekt der Erfindung dieselben Vorteile erzielt und lassen sich dieselben Merkmale verwirklichen, wie sie ausführlich in Bezug auf das Computerprogrammprodukt nach dem ersten Aspekt der Erfindung erläutert worden sind.

Dass die elektrische Ladestation zum elektrischen Laden einer Traktionsbatterie eines Fahrzeugs eingerichtet ist bedeutet selbstverständlich, dass die elektrische Ladestation verschiedene Fahrzeuge, wie beispielsweise Elektrofahrzeug oder Plug-In HybridFahrzeuge, elektrisch laden kann.

Es kann vorgesehen sein, dass die elektrische Ladestation zumindest eine Hardwarekomponente aufweist, die den zumindest einen zweiten Vorgang ausführt. Insoweit kann auch von zumindest einer Funktion gesprochen werden, die von der zumindest einen Hardwarekomponente ausgeführt wird.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigen:
- Fig. 1: eine schematische Ansicht eines Ausführungsbeispiels einer erfindungsgemäßen elektrischen Ladestation;
- Fig. 2: eine schematische Darstellung eines Ausführungsbeispiels eines erfindungsgemäßen Computerprogrammprodukts auf der elektrischen Ladestation aus Fig. 1;
- Fig. 3 und: eine weitere schematische Ansicht der elektrischen Ladestation aus Fig. 1;
- Fig. 4: eine schematische Ansicht der Verfahrensschritte eines Ausführungsbeispiels eines erfindungsgemäßen Verfahrens.

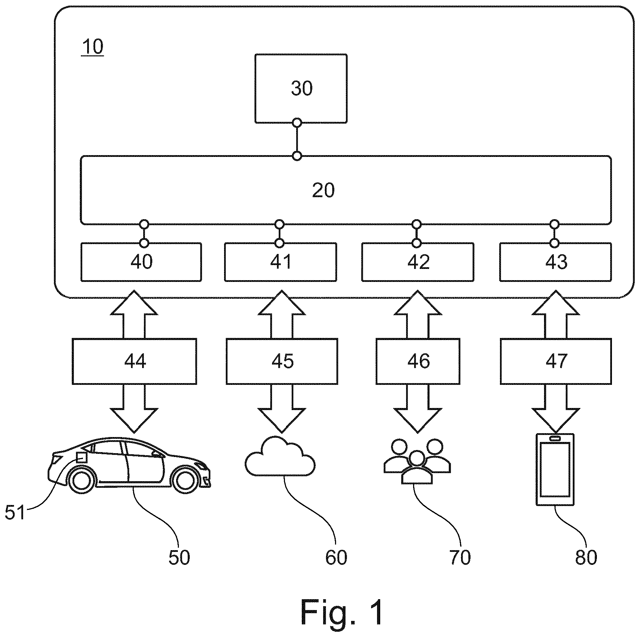

Elemente mit gleicher Funktion und Wirkungsweise sind in den Figuren 1 bis 4 jeweils mit denselben Bezugszeichen versehen.

Figur 1 zeigt eine elektrische Ladestation 10 zum Laden einer Traktionsbatterie 51 eines Fahrzeugs 50. Das Fahrzeug 50 kann beispielsweise ein Elektrofahrzeug oder ein Plug-In Hybrid-Fahrzeug sein. Die elektrische Ladestation 10 kann eine kapazitive oder induktive Ladestation 10 sein. Die elektrische Ladestation 10 kann aber auch in einer sogenannten Smartpole mit einer Lademöglichkeit für ein Elektrofahrzeug verwendet werden bzw. als eine Smartpole ausgebildet sein.

Die elektrische Ladestation 10 weist in dem vorliegenden Ausführungsbeispiel mehrere unterschiedliche Hardwarekomponenten 40, 41, 42, 43 auf. Selbstverständlich kann die Anzahl der Hardwarekomponenten 40, 41, 42, 43 auch geringer oder größer als vier sein. Bei den Hardwarekomponenten 40, 41, 42, 43 handelt es um Vorrichtungen der elektrischen Ladestation 10, die jeweils eine Kommunikations- und/oder Interaktionsschnittstelle 44, 45, 46, 47 (im Folgenden vereinfacht als Kommunikationsschnittstellen bezeichnet) nach außen bilden.

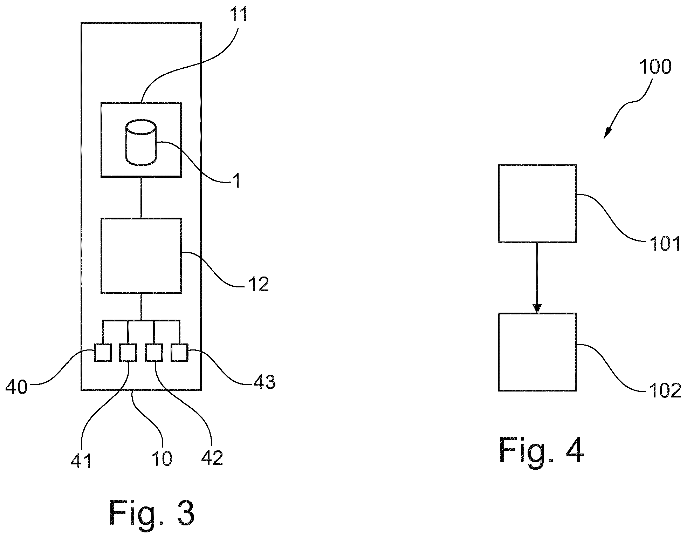

Neben diesen Hardwarekomponenten 40, 41, 42, 43 weist die elektrische Ladestation 10 auch Softwarekomponenten auf, die vorliegend durch eine Firmware 20 und ein Skript 30 gebildet werden. Die Firmware 20 und das Skript 30 bilden ein Computerprogrammprodukt 1 aus, welches, wie die Figur 3 in einer weiteren schematischen Ansicht der elektrischen Ladestation zeigt, in einem computerlesbaren Speichermedium bzw. Datenspeicher 11 der elektrischen Ladestation 10 gespeichert ist.

Die in dem Computerprogrammprodukt 1 bzw. dem Skript 30 und der Firmware 20 enthaltenen Befehle werden in der elektrischen Ladestation 10 von einem Computer 12 bzw. einer Recheneinheit verarbeitet bzw. ausgeführt. Wie die Figur 3 erkennen lässt, sorgt der Computer 12 durch seine Anbindung an die Hardwarekomponenten 40, 41, 42, 43 dadurch für die Ausführung unterschiedlicher Vorgänge auf den Hardwarekomponenten 40, 41, 42, 43.

Die erste Hardwarekomponente 40 der elektrischen Ladestation 10 ist für die Ladekabelkommunikation zuständig. Entsprechend ist die erste Kommunikationsschnittstelle 44 eine Ladekabelschnittstelle 44. Mittels eines (nicht gezeigten) Ladekabels an der Ladekabelschnittstelle 44 kommuniziert das Fahrzeug 50 mit der elektrischen Ladestation 10.

Die zweite Hardwarekomponente 41 ist für eine WAN-Kommunikation zuständig (WAN: Wide Area Network). Die zweite Kommunikationsschnittstelle 45 ist entsprechend eine WAN-Kommunikationsschnittstelle 45. Mittels dieser wird eine Kommunikation der elektrischen Ladestation 10 zu einer IT-Infrastruktur bzw. einem Backend, vorliegend in einer Cloud 60, aufgebaut.

Die dritte Hardwarekomponente 42 ist für eine Kommunikation bzw. Interaktion mit einem Nutzer bzw. Anwender 70 der elektrischen Ladestation 10 zuständig. Die dritte Kommunikationsschnittstelle 46 ist beispielsweise ein Ein- und/oder Ausgabegerät. Das Einund/oder Ausgabegerät kann beispielsweise einen Bildschirm, Tasten und/oder Lautsprecher aufweisen. Entsprechend kann die dritte Kommunikationsschnittstelle 46 ein User Interface und/oder eine User Experience für den Anwender 70 bestimmen.

Die vierte Hardwarekomponente 43 ist für eine lokale Kommunikation mit einem externen Gerät 80, insbesondere I/O Gerät, beispielsweise einem Smartphone, zuständig.

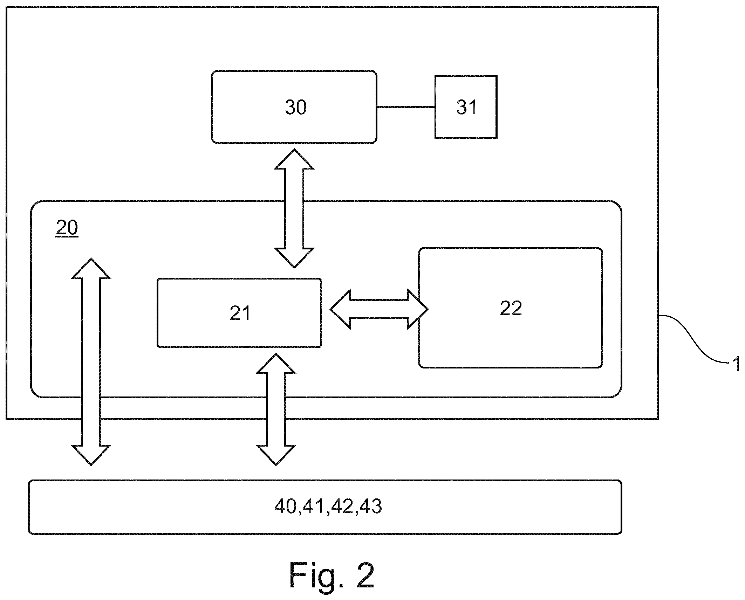

Figur 2 zeigt die Ausgestaltung des Computerprogrammprodukts 1 mit seinen Komponenten, insbesondere der Firmware 20 und dem Skript 30. Die Firmware 20 liegt kompiliert vor und ist durch einen Betreiber der elektrischen Ladestation 10 nicht veränderbar. Die Firmware 20 ist mit Befehlen zur Ausführung erster, vorliegend insbesondere sicherheitskritischer und bezüglich des Ladens normenrelevanter, Vorgänge eingerichtet. Das Skript 30 hingegen ist mit Befehlen zur Ausführung zweiter Vorgänge eingerichtet. Vorliegend sind die zweiten Vorgänge sicherheitsunkritische und bezüglich des Ladens normenirrelevante Vorgänge.

Das Skript 30 hat anhand der Firmware, welche stets mitausgeführt wird, keinen Einfluss auf sicherheitskritische oder normrelevante Prozesse. Das Skript 30 kann insbesondere keinen Strom zuschalten oder die abgegebene elektrische Leistung während eines Ladevorgangs erhöhen (sicherheitskritischer Prozess). Das Skript 30 kann auch keine normrelevanten Ausführungen beeinflussen (beispielsweise hat das Skript 30 keinen Einfluss auf Schaltzeiten, in einem Standard definierten Nachrichten oder einem Control Pilot-Signal während eines IEC61851-1 konformen Ladevorgangs). Ebenso kann die Firmware 20 dazu eingerichtet sein zu verhindern, dass Normen für die elektromagnetische Verträglichkeit (EMV) verletzt werden könnten. Die Firmware 20 hat somit stets die Hoheit über systemrelevante Hardwarekomponenten 40, 41, 42, 43.

Das Computerprogrammprodukt 1 umfasst eine HTTPS- und/oder FTP-Schnittstelle 31, mittels derer das Skript 30 verändert, ausgetauscht bzw. umprogrammiert werden kann. So können die sicherheitsunkritischen und bezüglich des Ladens normenirrelevanten Vorgänge, die von dem Skript 30 vorgegeben werden und bei der Ausführung seiner Befehle durch den Computer 1 ausgeführt werden, verändert werden.

In der Firmware 20 befinden sich ein Interpreter 21 für das Skript 30 sowie eine mit dem Interpreter 21 funktional gekoppelte Programmierschnittstelle 22 zu den Hardwarekomponenten 40, 41, 42, 43, die hier der Einfachheit halber in Form eines einzigen Blocks dargestellt sind. Das Skript 30 kann die sicherheitsunkritischen und bezüglich des Ladens normenirrelevanten Vorgänge auf den Hardwarekomponenten 40, 41, 42, 43 gemäß der seitens des Herstellers der elektrischen Ladestation 10 programmierten Programmierschnittstelle 22 ausführen. Auf von den zweiten Vorgängen verschiedene erste Vorgänge kann das Skript 30 keine Einflüsse ausüben, da die Programmierschnittstelle 22 diese ersten Vorgänge nicht vorsieht. Vorliegend sind die ersten Vorgänge sicherheitskritische und bezüglich des Ladens normenrelevante Vorgänge. Dadurch wird vorteilhafterweise eine hohe Individualisierbarkeit der elektrischen Ladestation 10 für den Betreiber bereitgestellt, ohne dass es zu einem Sicherheitsrisiko durch die Veränderung sicherheitskritischer und/oder bezüglich des Ladens normenrelevanter Vorgänge kommen kann.

Wie weiter oben bereits beschrieben worden ist, verfügt die Firmware 20 über den Interpreter 21 zum Interpretieren und zum späteren Ausführen des Skripts 30. Das Skript 30 ist dazu gedacht, dass beispielsweise der Betreiber oder der Eigentümer der elektrischen Ladestation 10 eigene Applikationen auf der elektrischen Ladestation 10 programmieren und damit eigene Vorgänge ausführen können. Einige beispielhafte Applikationen bzw. Vorgänge, die durch das Skript 30 ausgeführt werden können, werden im Folgenden erläutert.

Solche Applikationen bzw. Vorgänge können beispielsweise das User Interface bzw. die User Experience (UI/UX) auf dem Ein- und/oder Ausgabegerät 46 betreffen. Beispielsweise kann mithilfe einer WENN-DANN Bedingung im Skript 30 eine LED der elektrischen Ladestation 10 blinken, wenn ein Kunde vor der elektrischen Ladestation 10 steht und sich mittels einer RFID-Karte identifiziert. Solche Applikationen können auch eine Kommunikationsverbindung über WLAN oder Bluetooth mittels der lokalen Kommunikationsschnittstelle 47 betreffen. Beispielsweise kann mittels des Skripts 30 eine lokale Kommunikationsschnittstelle 47, beispielsweise WLAN, der elektrischen Ladestation 10 aktiviert werden, wenn ein Kunde einen Ladekabelstecker in einen als Buchse ausgebildeten Ladepunkt der elektrischen Ladestation 10 steckt bzw. die Ladekabelschnittstelle 44 nutzt. Die möglichen Vorgänge, die mit dem Skript 30 ausgeführt werden können, sind vielfältig und können über den Funktionsumfang der Firmware 20 hinausgehen.

Durch die Programmierschnittstelle 22 können dabei die Befehle des Skripts 30 den gewünschten Vorgang bewirken. In der Programmierschnittstelle 22 können beispielsweise Komponenten und Befehle für die lokale Kommunikationsschnittstelle 47 der elektrischen Ladestation 10 umfasst sein. Ebenso können mittels der Programmierschnittstelle 22 Einund/oder Ausgabegeräte in Form von Anzeigen, LEDs oder Bedientasten der elektrischen Ladestation 10 angesprochen oder ausgewertet werden. Unter Verwendung der Programmierschnittstelle 22 können sogar Nachrichten an eine nachgelagerte IT-Infrastruktur in der Cloud 60 mittels dem standardisierten Protokoll OCPP (Open Charge Point Protocol) gesendet werden. Mittels der Programmierschnittstelle 22 könnten optionale Nachrichten, welche beispielsweise im Standard ISO15118 beschrieben werden, an ein Fahrzeug 50 gesendet werden oder es können Use Cases, welche im ISO15118 Standard definiert werden, mittels der Programmierschnittstelle 22 angetriggert bzw. ausgeführt werden.

Beispielsweise kann das Skript 30 Befehle zum Allokieren der Hardwarekomponenten 40, 41, 42, 43 umfassen. Wenn solche Befehle ausgeführt werden, werden die Hardwarekomponenten 40, 41, 42, 43, ausschließlich durch das Skript 30 angesteuert. Die Firmware 20 hat keinen steuernden Zugriff mehr auf die Hardwarekomponenten 40, 41, 42, 43 bis der Befehl im Skript 30 rückgängig gemacht wird (also im Skript 30 die Hardwarekomponenten 40, 41, 42, 43 wieder freigegeben werden) oder bis das Skript 30 beendet wird oder ein sicherheitskritisches Ereignis eintritt. Es ist beispielsweise mittels des Skripts 30 möglich, LEDs oder eine Anzeige der elektrischen Ladestation 10 individuell anzusteuern, um ein vom Betreiber gewünschtes Erscheinungsbild der elektrischen Ladestation 10 zu generieren. In einem solchen Fall kann vermieden werden, dass die Firmware 20 selbst die LEDs bzw. die Anzeige ansteuert, weil sonst das eigentlich gewünschte Erscheinungsbild gestört wird. In diesem Beispiel ist es also vorteilhaft, dass nur das Skript 30 einen steuernden Zugriff auf die LEDs bzw. auf die Anzeige besitzt.

Eine Ausführung eines Skripts 30 kann durch die Firmware 20 überwacht werden. Eine Endlosschleife beim Ausführen eines Skripts 30 kann beispielsweise durch die Firmware 20 detektiert werden. Bei einer solchen Detektion kann das hängende Skript 30 durch die Firmware 20 beendet oder neugestartet werden.

Figur 4 zeigt ein Ausführungsbeispiel eines erfindungsgemäßen Verfahrens 100. In dem ersten Verfahrensschritt 101 wird zumindest ein erster Vorgang, vorliegend ein sicherheitskritischer und bezüglich des Ladens normenrelevanter Vorgang, der elektrischen Ladestation 10 zum elektrischen Laden der Traktionsbatterie 51 des Fahrzeugs 50 mittels der von dem Computer 12 der elektrischen Ladestation 10 ausgeführten Firmware 20 ausgeführt. In dem zweiten Verfahrensschritt 102 wird zumindest ein zweiter Vorgang, vorliegend ein sicherheitsunkritischer und bezüglich des Ladens normenirrelevanter Vorgang, der elektrischen Ladestation 10 mittels des von dem Computer 12 ausgeführten Skripts 30 ausgeführt. Die beiden Verfahrensschritte 101, 102 können beliebig oft im Laufe des Verfahrens 100 wiederholt werden. Entscheidend ist einzig, dass die unterschiedlichen Arten von technischen Vorgängen einerseits mittels des Skripts 30 und andererseits mittels der Firmware 20 ausgeführt werden, sodass es zu keiner verminderten Sicherheit für den Nutzer der elektrischen Ladestation 10 kommen kann.

### Bezugszeichenliste

- 1: Computerprogrammprodukt
- 10: elektrische Ladestation
- 11: Datenspeicher, Speichermedium
- 12: Computer
- 20: Firmware
- 21: Interpreter
- 22: Programmierschnittstelle
- 30: Skript
- 31: HTTPS- und/oder FTP-Schnittstelle
- 40: erste Hardwarekomponente
- 41: zweite Hardwarekomponente
- 42: dritte Hardwarekomponente
- 43: vierte Hardwarekomponente
- 44: erste Kommunikationsschnittstelle, Ladekabelschnittstelle
- 45: zweite Kommunikationsschnittstelle, WAN-Kommunikationsschnittstelle
- 46: dritte Kommunikationsschnittstelle, Ein- und/oder Ausgabegerät
- 47: vierte Kommunikationsschnittstelle, lokale Kommunikationsschnittstelle
- 50: Fahrzeug
- 51: Traktionsbatterie
- 60: Cloud
- 70: Anwender
- 80: externes Gerät
- 100: Verfahren
- 101: erster Verfahrensschritt
- 102: zweiter Verfahrensschritt

## Patentansprüche

1. Computerprogrammprodukt (1) für eine elektrische Ladestation (10) zum elektrischen Laden einer Traktionsbatterie (51) eines Fahrzeugs (50), wobei das Computerprogrammprodukt (1) eine Firmware (20) aufweist, welche Befehle umfasst, die bei Ausführung der Firmware (20) durch zumindest einen Computer (12) der elektrischen Ladestation (10) zumindest einen ersten Vorgang der elektrischen Ladestation (10) ausführen, wobei das Computerprogrammprodukt (1) einen Interpreter (21) für ein Skript (30) aufweist, wobei der Interpreter (21) Befehle umfasst, die bei Ausführung des Interpreters (21) durch den zumindest einen Computer (12) in dem Skript (30) befindliche Befehle ausführen, die zumindest einen zweiten Vorgang der elektrischen Ladestation (10) ausführen, wobei das Skript (30) zum Erlauben einer Ausführung von dem zumindest einen zweiten Vorgang der elektrischen Ladestation (10) ausgestaltet ist, ohne den zumindest einen ersten Vorgang der elektrischen Ladestation (10) zu erlauben, wobei der zumindest eine erste Vorgang und der zumindest eine zweite Vorgang voneinander verschieden sind, **dadurch gekennzeichnet, dass** der zumindest eine erste Vorgang ein sicherheitskritischer und bezüglich des Ladens normenrelevanter Vorgang der elektrischen Ladestation (10) ist und der zumindest eine zweite Vorgang ein sicherheitsunkritischer und bezüglich des Ladens normenirrelevanter Vorgang der elektrischen Ladestation (10) ist.

2. Computerprogrammprodukt (1) nach Anspruch 1, wobei das Computerprogrammprodukt (1) ferner eine mit dem Interpreter (21) verknüpfte Programmierschnittstelle (22) aufweist, welche Befehle umfasst, die bei Ausführung des Interpreters (21) und der Programmierschnittstelle (22) durch den zumindest einen Computer (12) die in dem Skript (30) befindlichen Befehle ausführen, die den zumindest einen zweiten Vorgang der elektrischen Ladestation (10) ausführt, wobei insbesondere der Interpreter (21) und/oder die Programmierschnittstelle (22) in der Firmware (20) enthalten ist.

3. Computerprogrammprodukt (1) nach Anspruch 2, wobei die Programmierschnittstelle (22) mit einem vorgegebenen Vorgangsumfang für den zumindest einen zweiten Vorgang eingerichtet ist, der bei Ausführung der in dem Skript (30) befindlichen Befehle ausgeführt werden kann.

4. Computerprogrammprodukt (1) nach einem der voranstehenden Ansprüche, wobei die Firmware (20) kompiliert ist.

5. Computerprogrammprodukt (1) nach einem der voranstehenden Ansprüche, wobei das Computerprogrammprodukt (1) das Skript (30) umfasst.

6. Computerprogrammprodukt (1) nach einem der voranstehenden Ansprüche, wobei das Skript (30) außerhalb der Firmware (20) angeordnet ist, und/oder wobei das Skript (30) dazu eingerichtet ist, mittels einer HTTPS- und/oder eine FTP-Schnittstelle (31) verändert und/oder ausgetauscht zu werden.

7. Computerprogrammprodukt (1) nach einem der voranstehenden Ansprüche, wobei die Firmware (20) ferner Befehle umfasst, die bei Ausführung der Firmware (20) durch den zumindest einen Computer (12) zumindest einen zweiten Vorgang der elektrischen Ladestation (10) ausführt.

8. Computerprogrammprodukt (1) nach Anspruch 7, wobei das Skript (30) mit einem Vorrang bei der Ausführung des zumindest einen zweiten Vorgangs gegenüber der Firmware (20) eingerichtet ist.

9. Computerimplementiertes Verfahren (100) zum elektrischen Laden einer Traktionsbatterie (51) eines Fahrzeugs (50), welches insbesondere bei Ausführung des Computerprogrammprodukts (1) nach einem der voranstehenden Ansprüche auf dem zumindest einem Computer (12) der elektrischen Ladestation (10) durchgeführt wird, wobei das Verfahren (100) die folgenden Schritte aufweist:
(a) Ausführen zumindest eines ersten Vorgangs der elektrischen Ladestation (10) zum elektrischen Laden der Traktionsbatterie (51) des Fahrzeugs (50) mittels einer von zumindest einem Computer (12) der elektrischen Ladestation (10) ausgeführten Firmware (20) der elektrischen Ladestation (10), und
(b) Ausführen zumindest eines zweiten Vorgangs der elektrischen Ladestation (10) mittels eines von dem zumindest einen Computer (12) ausgeführten Skripts (30) der elektrischen Ladestation (10), wobei das Skript (30) die Ausführung von dem zumindest einen zweiten Vorgang der elektrischen Ladestation (10) erlaubt, ohne den zumindest einen ersten Vorgang der elektrischen Ladestation (10) zu erlauben, wobei der zumindest eine erste Vorgang und der zumindest eine zweite Vorgang voneinander verschieden sind,
**dadurch gekennzeichnet, dass** der zumindest eine erste Vorgang ein sicherheitskritischer und bezüglich des Ladens normenrelevanter Vorgang der elektrischen Ladestation (10) ist und der zumindest eine zweite Vorgang ein sicherheitsunkritischer und bezüglich des Ladens normenirrelevanter Vorgang der elektrischen Ladestation (10) ist.

10. Verfahren (100) nach Anspruch 9, wobei der zumindest eine zweite Vorgang der elektrischen Ladestation (10) mittels eines in der Firmware (20) enthaltenen Interpreters (21), welcher das Skript (30) ausführt, ausgeführt wird.

11. Computerlesbares Speichermedium (11), auf welchem das Computerprogrammprodukt (1) nach einem der Ansprüche 1 bis 8 gespeichert ist.

12. Elektrische Ladestation (10) zum elektrischen Laden einer Traktionsbatterie (51) eines Fahrzeugs (50), wobei die elektrische Ladestation (10) zumindest einen Computer (12) und das computerlesbare Speichermedium (11) nach Anspruch 11 enthält.

13. Elektrische Ladestation (10) nach Anspruch 12, wobei die elektrische Ladestation (10) zumindest eine Hardwarekomponente (40, 41, 42, 43) aufweist, die den zumindest einen zweiten Vorgang ausführt.

## Claims

1. A computer program product (1) for an electric charging station (10) for electrically charging a traction battery (51) of a vehicle (50), the computer program product (1) having a firmware (20) which comprises instructions which, when the firmware (20) is executed by at least one computer (12) of the electric charging station (10), execute at least a first operation of the electric charging station (10), the computer program product (1) having an interpreter (21)for a script (30), the interpreter (21) comprising instructions which, when the interpreter (21) is executed by the at least one computer (12), execute instructions contained in the script (30), which, upon execution of the interpreter (21) by the at least one computer (12), execute instructions located in the script (30) which execute at least one second operation of the electric charging station (10), wherein the script (30) is designed to allow execution of the at least one second operation of the electric charging station (10) without allowing the at least one first operation of the electric charging station (10), wherein the at least one first operation and the at least one second operation are different from each other,
**characterized in that**
the at least one first operation is a safety-critical process of the electric charging station (10) that is relevant to the standard with regard to charging, and the at least one second operation is a process of the electric charging station (10) that is not critical to safety and is not relevant to the standard with regard to charging.

2. The computer program product (1) according to claim 1, wherein the computer program product (1) further comprises a programming interface (22) associated with the interpreter (21), which comprises instructions which, when the interpreter (21) and the programming interface (22) are executed by the at least one computer (12), execute the instructions located in the script (30) which executes the at least one second operation of the electric charging station (10), wherein in particular the interpreter (21) and/or the programming interface (22) is included in the firmware (20).

3. The computer program product (1) according to claim 2, wherein the programming interface (22) is set up with a predetermined scope of operations for the at least one second operation that can be executed upon execution of the instructions located in the script (30).

4. The computer program product (1) according to one of the preceding claims, wherein the firmware (20) is compiled.

5. The computer program product (1) according to any one of the preceding claims, wherein the computer program product (1) comprises the script (30).

6. The computer program product (1) according to one of the preceding claims, wherein the script (30) is arranged outside the firmware (20), and/or wherein the script (30) is arranged to be modified and/or exchanged by means of an HTTPS and/or an FTP interface (31).

7. The computer program product (1) according to any one of the preceding claims, wherein the firmware (20) further comprises instructions which, when the firmware (20) is executed by the at least one computer (12), executes at least a second operation of the electric charging station (10).

8. The computer program product (1) according to claim 7, wherein the script (30) is set up with a priority in the execution of the at least one second operation over the firmware (20).

9. A computer-implemented method (100) for electrically charging a traction battery (51) of a vehicle (50), which is carried out in particular when executing the computer program product (1) according to one of the preceding claims on the at least one computer (12) of the electric charging station (10), wherein the method (100) comprises the following steps:
(a) Executing at least a first operation of the electric charging station (10) for electrically charging the traction battery (51) of the vehicle (50) by means of a firmware (20) of the electric charging station (10) executed by at least one computer (12) of the electric charging station (10), and
(b) Executing at least one second operation of the electric charging station (10) by means of a script (30) of the electric charging station (10) executed by the at least one computer (12), wherein the script (30) allows the execution of the at least one second operation of the electric charging station (10) without allowing the at least one first operation of the electric charging station (10), wherein the at least one first operation and the at least one second operation are different from each other,
**characterized in that**
the at least one first operation is a safety-critical process of the electric charging station (10) that is relevant to the standard with regard to charging, and the at least one second operation is a process of the electric charging station (10) that is not critical to safety and is not relevant to the standard with regard to charging.

10. The method (100) according to claim 9, wherein the at least one second operation of the electric charging station (10) is executed by means of an interpreter (21) contained in the firmware (20) which executes the script (30).

11. A computer-readable storage medium (11) on which the computer program product (1) according to any one of claims 1 to 8 is stored.

12. An electric charging station (10) for electrically charging a traction battery (51) of a vehicle (50), wherein the electric charging station (10) includes at least one computer (12) and the computer-readable storage medium (11) according to claim 11.

13. The electric charging station (10) according to claim 12, wherein the electric charging station (10) comprises at least one hardware component (40, 41, 42, 43) that performs the at least one second operation.

## Revendications

1. Produit de programme informatique (1) pour une station de charge électrique (10) pour charger électriquement une batterie de traction (51) d'un véhicule (50), le produit de programme informatique (1) ayant un micrologiciel (20) qui comprend des instructions qui, lors de l'exécution du micrologiciel (20) par au moins un ordinateur (12) de la station de charge électrique (10), exécutent au moins une première opération de la station de charge électrique (10), le produit de programme informatique (1) ayant un interpréteur (21) pour un script (30), l'interpréteur (21) comprenant des instructions, qui, lors de l'exécution de l'interpréteur (21) par le au moins un ordinateur (12), exécutent des instructions contenues dans le script (30) qui exécutent au moins une deuxième opération de la station de charge électrique (10), le script (30) étant configuré pour permettre l'exécution de l'au moins une deuxième opération de la station de charge électrique (10) sans permettre l'au moins une première opération de la station de charge électrique (10), l'au moins une première opération et l'au moins une deuxième opération étant différentes l'une de l'autre,
**caractérisé en ce que**
l'au moins une première opération est une opération de la station de charge électrique (10) critique pour la sécurité et pertinente pour les normes en ce qui concerne la charge et l'au moins une deuxième opération est une opération de la station de charge électrique (10) non critique pour la sécurité et non pertinente pour les normes en ce qui concerne la charge.

2. Produit programme d'ordinateur (1) selon la revendication 1, ledit produit programme d'ordinateur (1) comprenant en outre une interface de programmation (22) associée à l'interpréteur (21), ladite interface de programmation (22) comprenant des instructions qui, lorsque l'interpréteur (21) et l'interface de programmation (22) sont exécutés par ledit au moins un ordinateur (12), exécutent les instructions contenues dans le script (30) qui exécute ladite au moins une deuxième opération de la station de charge électrique (10), dans lequel, en particulier, l'interpréteur (21) et/ou l'interface de programmation (22) sont contenus dans le micrologiciel (20).

3. Produit programme d'ordinateur (1) selon la revendication 2, dans lequel l'interface de programmation (22) est configurée avec une portée d'opération prédéterminée pour ladite au moins une deuxième opération qui peut être exécutée lors de l'exécution des instructions contenues dans le script (30).

4. Produit programme d'ordinateur (1) selon l'une quelconque des revendications précédentes, dans lequel le micrologiciel (20) est compilé.

5. Produit programme d'ordinateur (1) selon l'une quelconque des revendications précédentes, dans lequel le produit programme d'ordinateur (1) comprend le script (30).

6. Produit programme d'ordinateur (1) selon l'une quelconque des revendications précédentes, dans lequel le script (30) est situé à l'extérieur du micrologiciel (20), et/ou dans lequel le script (30) est adapté pour être modifié et/ou échangé au moyen d'une interface HTTPS et/ou d'une interface FTP (31).

7. Produit programme d'ordinateur (1) selon l'une quelconque des revendications précédentes, dans lequel le micrologiciel (20) comprend en outre des instructions qui, lorsque le micrologiciel (20) est exécuté par l'au moins un ordinateur (12), exécutent au moins une deuxième opération de la station de charge électrique (10).

8. Produit programme d'ordinateur (1) selon la revendication 7, dans lequel le script (30) est agencé avec une priorité sur le micrologiciel (20) dans l'exécution de ladite au moins une deuxième opération.

9. Procédé (100) mis en oeuvre par ordinateur pour charger électriquement une batterie de traction (51) d'un véhicule (50), qui est notamment mis en oeuvre lors de l'exécution du produit programme informatique (1) selon l'une des revendications précédentes sur l'au moins un ordinateur (12) de la station de charge électrique (10), ledit procédé (100) comprenant les étapes suivantes :
(a) L'exécution d'au moins une première opération de la station de charge électrique (10) pour charger électriquement la batterie de traction (51) du véhicule (50) au moyen d'un micrologiciel (20) de la station de charge électrique (10) exécuté par au moins un ordinateur (12) de la station de charge électrique (10), et
(b) L'exécution d'au moins une deuxième opération de la station de charge électrique (10) au moyen d'un script (30) de la station de charge électrique (10) exécuté par le au moins un ordinateur (12), le script (30) permettant l'exécution de l'au moins une deuxième opération de la station de charge électrique (10) sans permettre l'au moins une première opération de la station de charge électrique (10), l'au moins une première opération et l'au moins une deuxième opération étant différentes l'une de l'autre,
**caractérisé en ce que**
l'au moins une première opération est une opération de la station de charge électrique (10) critique pour la sécurité et pertinente pour les normes en ce qui concerne la charge et l'au moins une deuxième opération est une opération de la station de charge électrique (10) non critique pour la sécurité et non pertinente pour les normes en ce qui concerne la charge.

10. Procédé (100) selon la revendication 9, dans lequel ladite au moins une deuxième opération de la station de charge électrique (10) est exécutée au moyen d'un interpréteur (21) contenu dans le micrologiciel (20) qui exécute le script (30).

11. Support de stockage lisible par ordinateur (11) sur lequel est stocké le produit programme d'ordinateur (1) selon l'une quelconque des revendications 1 à 8.

12. Station de charge électrique (10) pour charger électriquement une batterie de traction (51) d'un véhicule (50), la station de charge électrique (10) comprenant au moins un ordinateur (12) et le support de stockage lisible par ordinateur (11) selon la revendication 11.

13. Station de charge électrique (10) selon la revendication 12, dans laquelle la station de charge électrique (10) comprend au moins un composant matériel (40, 41, 42, 43) qui exécute ladite au moins une deuxième opération.
